# EUROPEAN PATENT SPECIFICATION

(11) **EP 2 692 926 B1**
(45) Date of publication and mention of the grant of the patent: **16.03.2016**
(21) Application number: 12764370.8
(22) Date of filing: 24.01.2012
(51) Int. Cl.: D06C 3/06, D04H 1/559, B29C 55/18, B65H 21/00, B65H 19/00, D06H 5/00, D04H 1/70, B29C 65/08

(54) **METHOD FOR PRODUCING ELASTIC SHEETS**
VERFAHREN ZUR HERSTELLUNG ELASTISCHER WARENBAHNEN
PROCÉDÉ PERMETTANT DE PRODUIRE DES FEUILLES ÉLASTIQUES

(30) Priority: 29.03.2011 JP 2011073697
(43) Date of publication of application: 05.02.2014
(73) Proprietor: Unicharm Corporation, Ehime 799-0111 (JP)
(72) Inventor: OKUDA, Jun, Kanonji-shi, Kagawa 769-1602 (JP); ISHIKAWA, Shinichi, Kanonji-shi, Kagawa 769-1602 (JP); NAKAMURA, Taishi, Kanonji-shi, Kagawa 769-1602 (JP); HASHIMOTO, Tatsuya, Kanonji-shi, Kagawa 769-1602 (JP)
(74) Representative: Peter, Julian
(86) International application number: PCT/JP2012/051434
(87) International publication number: WO 2012/132519

(56) References cited:
- EP-A1- 2 096 201
- EP-A1- 2 119 529
- WO-A1-02/102665
- JP-A- 2008 156 785
- JP-U- 56 170 296
- US-A1- 2010 206 458
- US-B2- 6 737 141
- US-B2- 6 737 141

## Description

### [Technical Field]

The present invention relates to a method for manufacturing a stretch sheet in which a nonwoven fabric conveyed continuously is drawn in a conveyance direction by passing the nonwoven fabric through a gap between a pair of rotating rollers meshing with each tooth formed on an outer circumferential surface of the rollers.

### [Background Art]

Conventionally, a stretch sheet is manufactured as a component of an absorbent article such as a disposable diaper. A method for stretch sheet is manufactured by, for example, passing a continuous nonwoven fabric through a gap between a pair of rotating rollers meshing with each tooth formed on an outer circumferential surface of the rollers, and drawing the nonwoven fabric by the teeth of the rollers in the conveyance direction and thus deforming the nonwoven fabric (for example, see Patent Literature 1). Furthermore, the nonwoven fabric configuring the absorbent article is arranged in a state of being wound in the shape of a roll, and is supplied continuously between a pair of rollers from one end of the nonwoven fabric. In the process of manufacturing a stretch sheet, after supplying one nonwoven fabric in the shape of a roll, the other end of the nonwoven fabric and one end of the other nonwoven fabric are joined, and the other nonwoven fabric is supplied after the one nonwoven fabric. Patent Literature 2 discloses a technique of connecting one nonwoven fabric with the other nonwoven fabric by a sheet-like joint member.

### [Citation List]

### [Patent Literature]

[PTL 1] Japanese Unexamined Patent Application Publication No. 2008-156785 (Page 4, Fig. 2, etc.)
[PTL 2] US Patent No. 6863945 (Fig. 1, etc.)

Further prior art relevant for this technical field is disclosed as EP2096201A1, US 6,737,141B2, WO02/102665 A1, EP2119529A1 and US2010/206458A1.

### [Summary of Invention]

However, for example, the nonwoven fabric that is joined by the joint member described in Patent Literature 2 has a different rigidity at a portion where the joint member is in contact and a portion where the joint member is not in contact. Therefore, when an attempt is made to draw the nonwoven fabric by supplying it between the pair of rollers according to Patent Literature 1, the nonwoven fabric may be fractured at a boundary between the portion where the joint member is in contact and the portion where the joint member is not in contact.

Thus, the present invention has been achieved in view of such a situation and an object thereof is to provide a method for manufacturing a stretch sheet in which a nonwoven fabric conveyed in a continuous state is drawn in a conveyance direction by teeth formed on an outer circumferential surface of a pair of rotating rollers by passing the nonwoven fabric through a gap between the rotating rollers meshing with each of the teeth, comprising: a joining step of joining a first end of the nonwoven fabric in the conveyance direction and a second end of the other nonwoven fabric in the conveyance direction through a joint portion, wherein the joint portion is arranged intermittently in a cross direction that crosses the conveyance direction, wherein the joint portion is joined by a double-sided tape or an adhesive, and a length of the joint portion in the conveyance direction is longer than the drawing pitch of the teeth in the conveyance direction.

In order to resolve the above problem, a method for manufacturing the stretch sheet according to the present disclosure is summarized as manufacturing the stretch sheet in which a nonwoven fabric conveyed in a continuous state is drawn by teeth in a conveyance direction by passing the nonwoven fabric through a gap between a pair of rotating rollers meshing with each of the teeth formed on an outer circumferential surface, comprising: a joining step of joining a first end, in the conveyance direction, of the nonwoven fabric and a second end, in the conveyance direction, of the other nonwoven fabric, through a joint portion, wherein the joint portion is arranged intermittently in a cross direction that crosses the conveyance direction.

### [Brief Description of Drawings]

[Fig. 1] Fig. 1 is a diagram that schematically illustrates a process of manufacturing an absorbent article according to an embodiment of the present invention.
[Fig. 2] Fig. 2 is a diagram that schematically illustrates a joint part of a nonwoven fabric according to the present embodiment.
[Fig. 3] Fig. 3 is a diagram that schematically illustrates a joint part of a nonwoven fabric according to a first modification.
[Fig. 4] Fig. 4 is a diagram that schematically illustrates a joint part of a nonwoven fabric according to a second modification.
[Fig. 5] Fig. 5 is a diagram that schematically illustrates a joint part of a nonwoven fabric according to a third modification.

### [Description of Embodiments]

Next, a method for manufacturing an absorbent article according to the present invention is explained with reference to drawings. Specifically, (1) Configuration of stretch sheet, (2) Method for manufacturing stretch sheet, (3) Joining configuration of nonwoven fabric, and (4) Other embodiments will be explained.

### (1) Configuration of stretch sheet

A stretch sheet 3S according to the present embodiment is formed by a nonwoven fabric 3 in which extensible fibers and stretchable fibers are generated in a mixed manner by melt spinning, for example. Extensible fibers refer to fibers having a lesser elongation than the elongation of the stretchable fibers up to the elastic limit, and which cause a plastic deformation. In other words, extensible fibers are fibers that can generally be extended in an inelastic manner, and stretchable fibers are fibers that can be extended in an elastic manner. Specifically, extensible fibers are thermoplastic polyolefin fibers, and stretchable fibers are thermoplastic elastomer fibers having a higher melting point than the thermoplastic polyolefin fibers. The thermoplastic polyolefin fibers include, for example, single fibers such as polypropylene fibers and polyester fibers, and composite fibers having a core-sheath structure that are made of polypropylene and polyester, and the present embodiment, a single polypropylene fiber is used. The thermoplastic elastomer fibers include, for example, polyurethane fibers, and here, polyurethane fibers are used. In addition, the polypropylene fibers and polyurethane fibers are blended in a 50:50 weight ratio, for example.

A method for manufacturing the nonwoven fabric 3 includes a spun bond method (a method for linking fibers through self-adhesion with the help of direct spinning) and a chemical bond method (a method for bonding and linking fibers through the adhesion of an adhesive resin), and the present embodiment, the spun bond method is used. Furthermore, the basis weight and fiber diameter of the nonwoven fabric 3 are determined according to the requirement specification of the stretch sheet 3S. By subjecting the nonwoven fabric 3, which is thus configured, to drawing processing described later, stretchability is manifested in the nonwoven fabric 3, and the stretch sheet 3S is formed.

### (2) Method for manufacturing stretch sheet

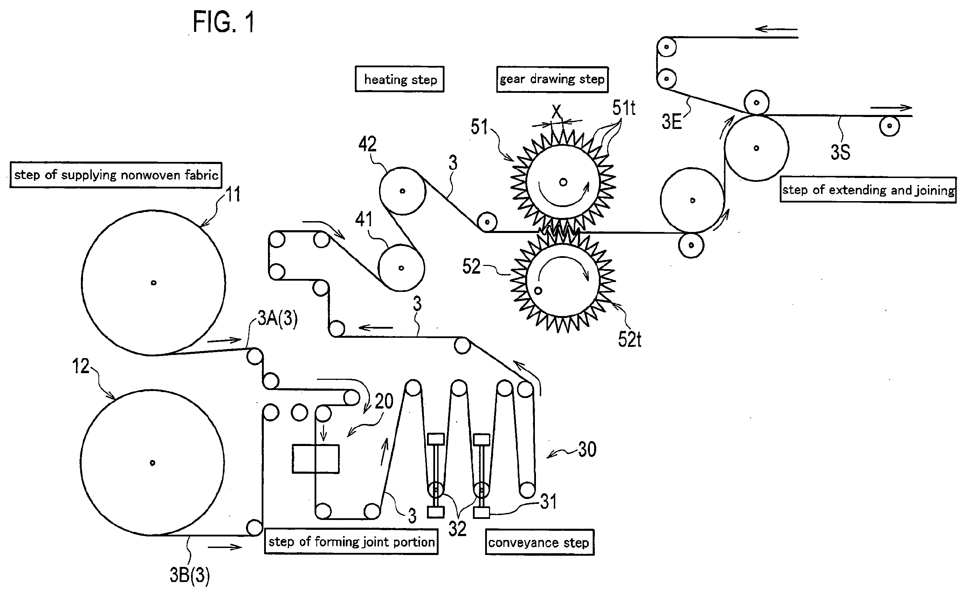

Fig. 1 is a diagram that schematically illustrates a process of manufacturing the stretch sheet. The process of manufacturing the stretch sheet includes a step of supplying nonwoven fabric, a step of forming joint portion (joining step), a conveying step, a heating step, a gear drawing step, and a step of extending and joining.

In the step of supplying nonwoven fabric, the nonwoven fabric 3, which is the material of the stretch sheet 3S, is conveyed continuously along the conveyance direction MD. The nonwoven fabric 3 is wound in the shape of a roll, and in the present embodiment, the nonwoven fabric 3 includes a nonwoven fabric 3A of a first nonwoven fabric roll 11 and a nonwoven fabric 3B of a second nonwoven fabric roll 12 that are wound around a rotational axis.

The step of forming joint portion is a joining step of joining the terminating end (a first end) of either one of the first nonwoven fabric roll 11 and the second nonwoven fabric roll 12 and the starting end (a second end) of the other nonwoven fabric roll through a joint portion. The joined nonwoven fabric is continuously supplied towards the gear drawing step that is described later. A joint forming device 20 used in the step of forming joint portion joins the terminating end of one nonwoven fabric and the starting end of the other nonwoven fabric. In between the step of supplying nonwoven fabric and the step of forming joint portion, there is arranged an end detecting sensor (not shown in the drawings) that detects the terminating end of the nonwoven fabric. The configuration of the end detecting sensor is not particularly restricted as long as the configuration is such that the end detecting sensor can detect the terminating end of one nonwoven fabric. The method for detecting the terminating end includes, for example, providing a colored paper tube for the detection of the sensor on the outer circumferential surface of the rotational axis of the nonwoven fabric roll, detecting the colored paper tube with the color sensor, and then detecting the terminating end of the nonwoven fabric roll. Furthermore, the other method for detecting the terminating end includes, for example, detecting the diameter of the material wound on the nonwoven fabric roll from the number of rotations of the nonwoven fabric roll, and then detecting the terminating end of the nonwoven fabric roll. Yet, the other method for detecting the terminating end includes, for example, pasting a member that can be detected by a metal detector, such as an aluminum tape, near the terminating end of the nonwoven fabric, and then detecting the terminating end of the nonwoven fabric by detecting the aluminum tape, for example, by the metal detector.

Furthermore, in between the step of supplying nonwoven fabric and the step of forming joint portion, there is arranged a material stopper (not shown in the drawings) that presses the terminating end of one nonwoven fabric before the joint forming device. The starting end of the other nonwoven fabric roll is led beforehand to the joint forming device 20 by hand, and when the conveyance of the terminating end of one nonwoven fabric roll is stopped by the material stopper, the starting end of the other nonwoven fabric roll is joined with the terminating end of the one nonwoven fabric roll. The step of forming joint portion will be explained later in detail.

In the conveyance step, the nonwoven fabric 3 is guided in the shape of letter W by a conveyor 30 having a guide member 31 arranged along a vertical direction, and a dancer roller 32 that slides in the vertical direction along the guide member 31, and is conveyed toward the heating step.

In the heating step, the nonwoven fabric 3 is heated by a pair of heating rollers 41 and 42 before the gear drawing step. The nonwoven fabric 3 is sequentially sent from the upstream heating roller 41 in the conveyance direction MD toward the downstream heating roller 42 while being wound in the shape of letter S on the outer circumferential surface of the heating rollers 41 and 42. The nonwoven fabric 3 is heated by the outer circumferential surface while in contact with the outer circumferential surface of the heating rollers 41 and 42.

In the gear drawing step, the drawing process is performed for the nonwoven fabric by a pair of upper and lower drawing gear rollers 51 and 52. The nonwoven fabric 3 is drawn along the conveyance direction MD. On the outer circumferential surface of the drawing gear rollers 51 and 52, teeth 51t and 52t are formed in the shape of a wave at a predetermined pitch X along the circumferential direction. During the time the drawing gear rollers 51 and 52 are performing a driving rotation at a predetermined circumferential speed, un-drawn nonwoven fabric 3 is passed through the gap between drawing gear rollers 51 and 52. The nonwoven fabric 3 is deformed in a three-point bending manner by the teeth 51t of the upper drawing gear roller 51 and the teeth 52t of the lower drawing gear roller 52 that mesh with each other, and is drawn in the circumferential direction of the drawing gear roller 51. In addition, after being drawn, the nonwoven fabric 3 is imparted with stretchability.

In the step of extending and joining, the drawn nonwoven fabric is joined. The nonwoven fabric 3 sent from the gear drawing step is extended, and the other nonwoven fabric 3E is joined with the nonwoven fabric that is in the extended state. It must be noted that joining the nonwoven fabric 3 in an extended state with the other nonwoven fabric 3E is performed to impart stretchability to the stretch sheet 3S on the basis of the high stretchability of the nonwoven fabric 3. In this way, the stretch sheet 3S having stretchability can be obtained.

### (3) Joining configuration of nonwoven fabric

Next, the joining configuration of the nonwoven fabric in the step of forming joint portion will be explained in detail. At the joint part of the nonwoven fabric, of the nonwoven fabric 3A of the first nonwoven fabric roll 11 and the nonwoven fabric 3B of the second nonwoven fabric roll, the terminating end (a first end) 3C of one nonwoven fabric 3A and the starting end (a second end) 3D of the other nonwoven fabric are joined. The joining of the nonwoven fabrics may be performed by using an adhesive, may be performed by using an adhesive tape having an adhesive, may be performed by a heat seal, or may be performed by an ultrasonic seal. In the present embodiment, the nonwoven fabrics are joined by using an adhesive tape 60. Specifically, the adhesive tape 60 is a double-sided tape on which an adhesive is applied to both surfaces of polyethylene foam.

In the step of forming joint portion, for example, after detecting the terminating end of one nonwoven fabric roll by the end detecting sensor, the terminating end of the nonwoven fabric roll is pressed by the material stopper, and the terminating end of one nonwoven fabric roll and the starting end of the other nonwoven fabric roll are joined by the joint forming device 20. Next, by cutting one nonwoven fabric near the joint portion, the terminating end of one nonwoven fabric is formed, and the feed of the other nonwoven fabric starts.

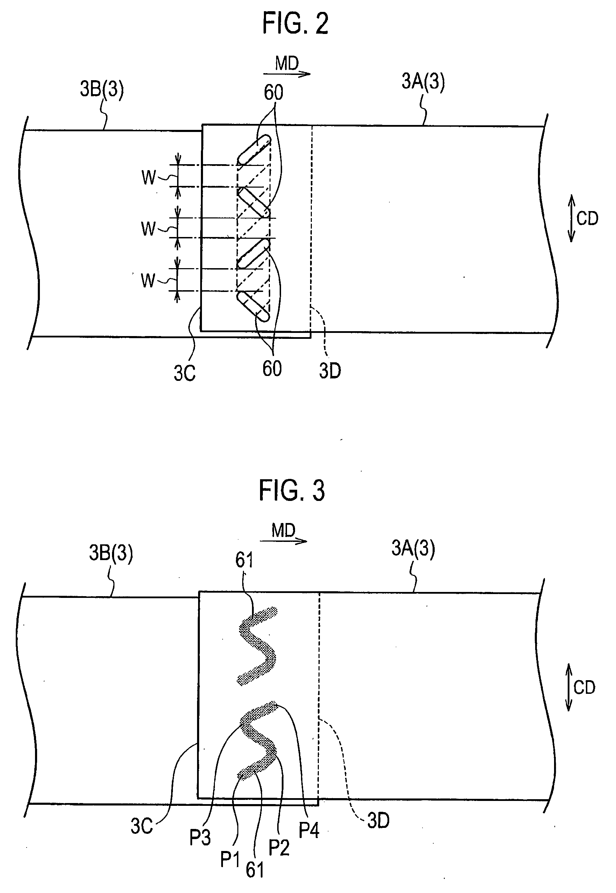

Fig. 2 is a diagram that schematically illustrates a joint part of the nonwoven fabric. The adhesive tape 60 is arranged intermittently in a cross direction CD. A gap W is provided between the adjoining adhesive tapes 60 in the cross direction CD. Therefore, as the adhesive tapes 60 are not in continuation along the cross direction CD, the continuous fracture of the nonwoven fabric 3 in the cross direction CD can be prevented when the nonwoven fabric 3 is pulled in the conveyance direction MD in the gear drawing step, etc.

For example, if the adhesive tapes 60 are arranged in continuation along the cross direction CD, the location where the tensile strength in the conveyance direction has declined is in continuation in the cross direction CD, and as a result, the nonwoven fabric 3 might be parted in the cross direction CD. However, as the adhesive tapes 60 are arranged intermittently in the cross direction CD, even if some part is fractured, the fractured portion is not in continuation in the cross direction, and therefore, the joining condition between one nonwoven fabric 3A and the other nonwoven fabric 3B can be maintained, and the chances of parting of the nonwoven fabric 3 in the cross direction CD are less. Thus, in the step of forming joint portion, even if the drawing process is performed while retaining the conveyance speed of the nonwoven fabric 3 at a high speed, the joining condition of the nonwoven fabrics is maintained, and the nonwoven fabric can be drawn or joined. When the nonwoven fabric is drawn by the gear rollers, the nonwoven fabric is drawn by the meshing of the teeth of the gear rollers, and therefore, the strain rate of the nonwoven fabric (the strain imparted to the nonwoven fabric per unit hour) changes during the process of passing through the gap between the gear rollers, and the maximum value of the strain rate may affect the damage caused to the nonwoven fabric. In order to reduce the strain rate, the conveyance speed may be reduced. However, if the conveyance speed is slowed down, the productivity declines. For example, when the adhesive tapes 60 are arranged in continuation along the cross direction CD, the nonwoven fabric is easily fractured while being drawn in the conveyance direction, and thus, the conveyance speed must be slowed down. However, by intermittently arranging the adhesive tapes 60 in the cross direction CD, even if the drawing process is performed in a state where the conveyance speed of the nonwoven fabric 3 is maintained at a high speed, the joining condition of the nonwoven fabrics is maintained and the nonwoven fabric can be drawn or joined, because of which the productivity can be improved.

A plurality of adhesive tapes 60 are provided, which are mutually separated along the cross direction CD that crosses the conveyance direction MD. The adhesive tapes 60 are inclined toward the ends of the nonwoven fabric 3 in the cross direction CD, from the upstream conveyance direction MD toward the downstream conveyance direction MD. By thus arranging the adhesive tapes 60, it is possible to retain curvature of the material of the non-joint portion where the joint portion is not arranged. Furthermore, when the nonwoven fabric is conveyed in the conveyance direction MD, the folding-back of the starting end 3D of the other nonwoven fabric 3B in the conveyance direction upstream side can be prevented.

Moreover, the fracture elongation of the adhesive tapes 60 is desired to be more than that of the nonwoven fabric. When the stretch sheet is elongated by gear drawing, etc., it becomes difficult for the adhesive sheet to be fractured, making it possible to maintain in a state where the nonwoven fabrics are joined.

In addition, the length of the adhesive tape 60 in the conveyance direction MD is desired to be longer than a drawing pitch X/2 of the teeth 51t of the drawing gear roller 51 and the teeth 52t of the gear roller 52. The drawing pitch X/2 is half the length of a pitch X of the teeth 51t of the drawing gear roller 51 and the pitch X of the teeth 52t of the drawing gear roller 52. When the nonwoven fabric is drawn by the drawing gear roller 51, the nonwoven fabric is sandwiched by the teeth 51t of the upper drawing gear roller 51 and the teeth 52t of the lower drawing gear roller 52, and is drawn in the conveyance direction MD. At this time, the joining of the adhesive tape 60 with the nonwoven fabric that is positioned between the adjoining teeth in the circumferential direction may weaken. However, because the length of the adhesive tape 60 is longer than the drawing pitch X/2 of the teeth 51t of the drawing gear roller 51 and the teeth 52t of the gear roller 52, the adhesive tape 60 is similarly drawn while securing the joining condition with the nonwoven fabric that is positioned between the teeth, and therefore, the joining condition can be maintained.

It must be noted that the drawing of the nonwoven fabric through the gear drawing may suffice as long as the nonwoven fabric is at least drawn in the conveyance direction, and examples thereof include a configuration in which the nonwoven fabric is drawn in an inclined direction with respect to the conveyance direction such as a configuration in which the nonwoven fabric is drawn in the cross direction while being drawn in the conveyance direction. The area of the joint portion configured by the adhesive tapes 60 is desired to be 10% to 50% of the area of the joint region enclosed by the joint portion within the region in which one nonwoven fabric 3A overlaps the other nonwoven fabric 3B. The joint region enclosed by the joint portion within the region in which one nonwoven fabric 3A overlaps the other nonwoven fabric 3B is the region enclosing the peripheral lines of the joint portion (the adhesive tapes 60 in the present embodiment) in the region in which the nonwoven fabrics overlap. Specifically, the joint region is the region including the adhesive tape 60 positioned in the upper part and the adhesive tape 60 positioned in the lower part, as well as the space between the adhesive tape 60 positioned in the upper part and the adhesive tape 60 positioned in the lower part, as shown in Fig. 2. The joint region enclosed by the joint portion is shown by a dashed line in Fig. 2.

For example, if the area of the joint portion is too small (for example, the area is less than 10% of the area of the region in which one nonwoven fabric 3A overlaps the other nonwoven fabric 3B), sufficient joining strength may not be obtained. On the other hand, if the area of the joint portion is too large (for example, the area is more than 50% of the area of the region in which one nonwoven fabric 3A overlaps the other nonwoven fabric 3B), the region in which the strength of the nonwoven fabric has declined due to gear drawing increases, and the nonwoven fabric may be cut.

### (4) Other embodiments

The joining structure of the nonwoven fabrics is not restricted to the configuration according to the present embodiment. Next, the joining structure of a nonwoven fabric according to a modification will be explained. In the explanation of the modification provided below, the description of the configuration that is the same as the embodiment is omitted. Fig. 3 is a diagram that schematically illustrates a joint part of a nonwoven fabric according to a first modification. A plurality of joint portions 61 of the nonwoven fabrics according to the first modification are provided, and the joint portions 61 are configured by an adhesive. The adhesive is arranged in the shape of a wave within a predetermined region. Because the adhesive is thus arranged in the shape of a wave, the points where the stress is concentrated do not continue in the cross direction, and are displaced in the conveyance direction MD along the cross direction.

Specifically, if the points of concentration of stress of the joint portion 61 shown in Fig. 3 are indicated by P1 through P4 from the lower end side of the joint portion 61, P1 and P3 match along the cross direction, but P2 that is between P1 and P3 does not match P1 and P3, and is displaced in the cross direction. Thus, it is possible to restrain the fracture of the joint portion, which results from a point on which stress concentrates continuing in the cross direction.

Furthermore, the area of the joint portion 61 configured by the adhesive is desired to be 10% to 50% of the area of the joint region enclosed by the joint portion within the region in which one nonwoven fabric 3A overlaps the other nonwoven fabric 3B.

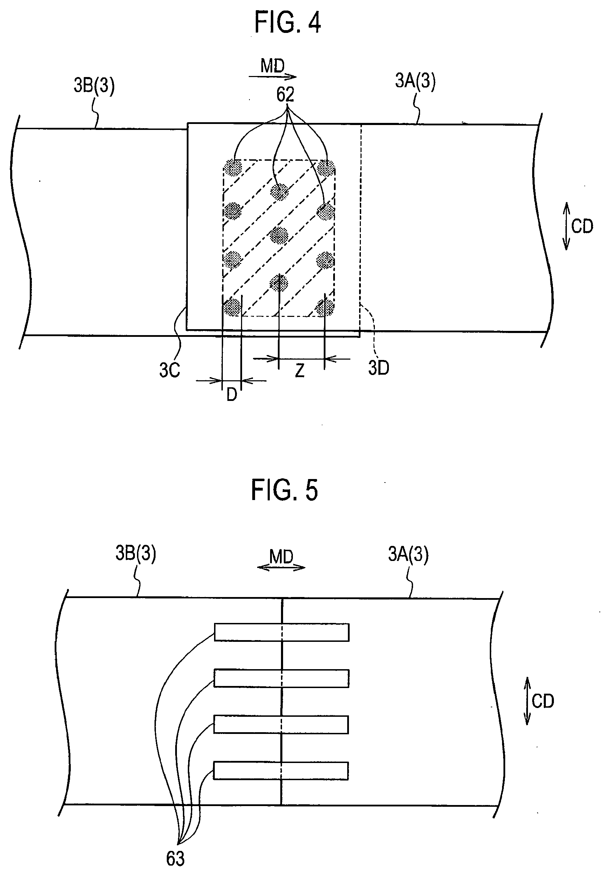

Fig. 4 is a diagram that schematically illustrates a joint part of a nonwoven fabric according to a second modification. The joint portions of the nonwoven fabrics according to the second modification not belonging to the invention are configured by a heat seal or a supersonic-wave seal. The joint portions 62 are circular in shape and a plurality of joint portions 62 are provided. By including a plurality of circular joint portions 62, and arranging the joint portions 62 in the entire region in which one nonwoven fabric 3A overlaps the other nonwoven fabric 3B, the entire region in which one nonwoven fabric 3A overlaps the other nonwoven fabric 3B can be joined. Furthermore, a pitch Z, in the conveyance direction MD, of the circular joint portions 62 is desired to be longer than the drawing pitch X/2 of the teeth 51t of the drawing gear roller 51 and the teeth 52t of the gear roller 52. For example, if a plurality of joint portions 62 exist between the adjoining teeth 51t and the teeth 52t in the circumferential direction, the joint portions 62 are broken easily due to the drawing.

Furthermore, a diameter D of the circular joint portions 62 that are joined by the heat seal or the supersonic-wave seal is desired to be smaller than the drawing pitch X/2 formed by the teeth 51t of the drawing gear roller 51 and the teeth 52t of the adjoining gear roller 52. For example, due to the fact that the fibers are fused together in the joint portions 62 by the heat seal, the expansibility declines as compared to the non-joint portions, and when the diameter D of the joint portions 62 is larger than the drawing pitch X/2, the joint portions are broken easily due to the drawing.

The area of the joint portion that is joined by the heat seal or the supersonic-wave seal is desired to be 5% to 30% of the area of the joint region enclosed by the joint portion within the region in which one nonwoven fabric 3A overlaps the other nonwoven fabric 3B. For example, if the area of the joint portion is too small (for example, the area is less than 5% of the area of the region in which one nonwoven fabric 3A overlaps the other nonwoven fabric 3B), sufficient joining strength may not be obtained. On the other hand, if the area of the joint portion is too large (for example, the area is more than 30% of the area of the region in which one nonwoven fabric 3A overlaps the other nonwoven fabric 3B), the region in which the strength of the nonwoven fabric has declined due to gear drawing increases, and the nonwoven fabric may be cut. The joint region enclosed by the joint portion is shown by a dashed line in Fig. 4.

Fig. 5 is a diagram that schematically illustrates a joint part of a nonwoven fabric according to a third modification. In the third modification, one nonwoven fabric and the other nonwoven fabric are not arranged in an overlapping state. The adhesive tapes 63 are arranged to span the nonwoven fabrics. Thus, even in the case of a configuration in which the nonwoven fabrics are not arranged in an overlapping manner, the nonwoven fabrics can be joined by the adhesive tapes 63. Furthermore, by intermittently arranging the adhesive tapes 63 in the cross direction, it is possible to prevent the nonwoven fabric from being continuously cut in the cross direction.

Thus, the present invention naturally includes various embodiments, not described herein. Therefore, the technical range of the present invention is to be defined only by the inventive specific matter according to the adequate claims from the above description. Furthermore, the stretch sheet manufactured in the present invention can be used as a component of a disposable diaper and a sanitary napkin.

In the above embodiment, the nonwoven fabric 3 including two types of fibers, such as the propylene fibers that are extensible fibers and the polyurethane fibers that are stretchable fibers, is illustrated as the nonwoven fabric 3 including a plurality of types of fibers, however, the types of fibers are not limited to two, and three or more types of fibers may be included.

In the above embodiment, the nonwoven fabric 3 in which the propylene fibers that are extensible fibers and the polyurethane fibers that are stretchable fibers are mixed together is illustrated as the nonwoven fabric 3 including a plurality of types of fibers, however, a layer of only extensible fibers and a layer of only stretchable fibers may be separated in the form of layers and stacked in the thickness wise direction of the nonwoven fabric 3. The number of such layers is not limited to two, for example, the nonwoven fabric 3 may have a three-layer structure in which a layer of only stretchable fibers is sandwiched between an upper and a lower layer of only extensible fibers.

Furthermore, the circular joint portions in the above embodiment are not limited to only a circular shape having a fixed radius, but may include an elliptical shape. In addition, the shape of the joint portions is not limited to a circular shape, and may include any other shape such as a triangular shape and a rectangular shape.

### [Industrial Applicability]

The joint portions, where a first end of one nonwoven fabric and a second end of the other nonwoven fabric are joined, are provided intermittently in the cross direction that orthogonally crosses the conveyance direction, and are also provided across the entire region in the cross direction. Thus, when the nonwoven fabric is drawn in the conveyance direction by a pair of rollers, it is possible to prevent the nonwoven fabric from being continuously fractured in the cross direction. Thus, it is possible to provide a method for manufacturing a stretch sheet in which a nonwoven fabric conveyed in a continuous state is drawn in a conveyance direction, where it is possible to restrain one nonwoven fabric and the other nonwoven fabric from being continuously fractured in the cross direction.

### [Reference Signs List]

3 ... Nonwoven fabric, 3S ... Stretch sheet, 11 ... First nonwoven fabric roll, 12 ... Second nonwoven fabric roll, 20 ... Joint forming device, 21 ... Terminating-end detecting sensor, 22 ... Guide box, 23 ... Press head, 30 ... Conveyor, 31 ... Guide member, 32 ... Dancer roller, 41, 42 ... Heating roller, 51 ... Upper drawing gear roller, 52 ... Lower drawing gear roller, 60, 61, 62, 63 ... joint portion

## Claims

1. A method for manufacturing a stretch sheet (3S) in which a nonwoven fabric (3) conveyed in a continuous state is drawn in a conveyance direction by teeth (51t, 52t) formed on an outer circumferential surface of a pair of rotating rollers (51, 52) by passing the nonwoven fabric through a gap between the rotating rollers meshing with each of the teeth, comprising:
a joining step of joining a first end (3C) of the nonwoven fabric (3) in the conveyance direction and a second end (3D) of the other nonwoven fabric in the conveyance direction through a joint portion, wherein
the joint portion is arranged intermittently in a cross direction that crosses the conveyance direction, wherein the joint portion is joined by a double-sided tape (60) or an adhesive (61, 63), and
a length of the joint portion in the conveyance direction is longer than the drawing pitch of the teeth (51t, 52t) in the conveyance direction.

2. The method for manufacturing a stretch sheet according to claim 1, wherein the joint portion is arranged to incline with respect to the conveyance direction, and in an extended manner toward an outer side from a center in the cross direction.

3. The method for manufacturing a stretch sheet according to claim 2, wherein the joint portion is arranged to extend from a center in the cross direction toward an outer side in the cross direction, from an upstream of the conveyance direction toward a downstream of the conveyance direction.

4. The method for manufacturing a stretch sheet according to any one of claims 1 through claim 3, wherein a pitch of the joint portion in the conveyance direction is longer than a drawing pitch of the teeth (51t, 52t) in the conveyance direction.

5. The method for manufacturing a stretch sheet according to any one of claim 1 through claim 4, wherein the joint portion is arranged in a region where the first end (3C) and the second end (3D) overlap, and
the area of the joint portion is 10% to 50% of the area of the joint region, the joint region being enclosed by the joint portion, the joint region being enclosed in the region in which the first end and the second end (3C, 3D) overlap.

## Patentansprüche

1. Verfahren zur Herstellung einer dehnbaren Lage (3S), bei dem ein kontinuierlich geförderter Vliesstoff (3) von Zähnen (51t, 52t), die an einer außenliegenden Umfangsfläche auf einem Paar rotierender Walzen (51, 52) gebildet sind, gezogen wird, indem der Vliesstoff durch einen Spalt zwischen den rotierenden Walzen, deren Zähne miteinander in Eingriff stehen, hindurchgeführt wird, umfasst:
einen Verbindungsschritt, indem das erste Ende (3C) des Vliesstoffes (3) in Transportrichtung, und das zweite Ende (3D) des anderen Vliesstoffes in Transportrichtung durch einen Verbindungsabschnitt verbunden werden, wobei
der Verbindungsabschnitt in einer Querrichtung, welche die Transportrichtung kreuzt, intermittierend angeordnet ist, wobei der Verbindungsabschnitt durch ein doppelseitiges Klebeband (60) oder einen Klebstoff (61, 63) verbunden ist, und
eine Länge des Verbindungsabschnittes in Transportrichtung größer ist als der Verzahnungsabstand (51t, 52t) in Transportrichtung.

2. Verfahren zur Herstellung einer dehnbaren Lage nach Anspruch 1, wobei der Verbindungsabschnitt bezüglich zur Transportrichtung geneigt angeordnet ist, und in einer erweiterten Form von einer Mitte aus zur Außenseite in Querrichtung gerichtet ist.

3. Verfahren zur Herstellung einer dehnbaren Lage nach Anspruch 2, wobei der Verbindungsabschnitt angeordnet ist, sich ausgehend von einer Mitte zu einer Außenweite in Querrichtung und, von einer zulaufseitigen Transportrichtung in Richtung einer ablaufseitigen Transportrichtung auszubreiten.

4. Methode zur Herstellung einer dehnbaren Lage nach einem der vorherigen Ansprüche 1 bis 3, wobei ein Abstand des Verbindungsabschnittes in Transportrichtung größer ist als die Zahnteilung (51t, 52t) in Transportrichtung.

5. Verfahren zur Herstellung einer dehnbaren Lage nach einem der vorherigen Ansprüche 1 bis 4, wobei der Verbindungsabschnitt, in einem Bereich angeordnet, in dem sich das erste Ende (3C) und das zweite Ende (3D) überlappen, und
die Fläche des Verbindungsabschnittes 10% bis 50% der Fläche des Verbindungsbereichs ist, der Verbindungsabschnitt in dem Verbindungsbereich enthalten ist, wobei der Verbindungsbereich im Bereich enthalten ist, in dem sich das erste Ende und das zweite Ende (3C, 3D) überlappen.

## Revendications

1. Procédé de fabrication d'un drap étirable (3*S*) dans lequel un tissu non tissé (3) transporté dans un état continu est étiré dans une direction de transport par des dents (51t, 52t) formées sur une surface circonférentielle extérieure d'une paire de rouleaux rotatifs (51, 52) par passage du tissu non tissé à travers un intervalle entre les rouleaux rotatifs qui s'engrènent avec chacune des dents, comprenant :
une étape de jonction d'une première extrémité (3C) du tissu non tissé (3) dans la direction de transport et d'une deuxième extrémité (3D) de l'autre tissu non tissé dans la direction de transport à travers une partie de jonction,
la partie de jonction étant disposée par intermittence dans une direction transversale qui traverse la direction de transport, la partie de jonction étant jointe par une bande à double face (60) ou par un adhésif (61, 63), et
une longueur de la partie de jonction dans la direction de transport étant plus grande que le pas de traction des dents (51t, 52t) dans la direction de transport.

2. Procédé de fabrication d'un drap étirable selon la revendication 1, dans lequel la partie de jonction est disposée pour s'incliner par rapport à la direction de transport, et d'une manière étendue vers un côté extérieur à partir d'un centre dans une direction transversale.

3. Procédé de fabrication d'un drap étirable selon la revendication 2, dans lequel la partie de jonction est disposée pour s'étendre à partir d'un centre dans une direction transversale vers un côté extérieur dans la direction transversale, à partir d'un côté amont de la direction de transport vers un côté aval de la direction de transport.

4. Procédé de fabrication d'un drap étirable selon l'une quelconque des revendications 1 à 3, dans lequel un pas de la partie de jonction dans la direction de transport est plus long qu'un pas de traction des dents (51t, 52t) dans la direction de transport.

5. Procédé de fabrication d'un drap étirable selon l'une quelconque des revendications 1 à 4, dans lequel la partie de jonction est disposée dans une région où la première extrémité (3C) et la deuxième extrémité (3D) se chevauchent, et
la surface de la partie de jonction représente 10 à 50 % de la surface de la région de jonction, la région de jonction étant confinée par la partie de jonction, la région de jonction étant confinée dans la région dans laquelle la première extrémité et la deuxième extrémité (3C, 3D) se chevauchent.
